# EUROPEAN PATENT APPLICATION

(11) **EP 4 083 476 A1**
(43) Date of publication of application: **02.11.2022**
(21) Application number: 21171365.6
(22) Date of filing: 29.04.2021
(51) Int. Cl.: F16J 9/14, B64C 1/00, E05F 3/00, F15B 15/14, F16J 9/20, F16J 15/06, F16J 15/18, F16J 15/34

(54) **SEALING MEMBER AND DOOR ACTUATOR**

(71) Applicant: dormakaba Deutschland GmbH, 58256 Ennepetal (DE)
(72) Inventor: Leong, Man Yee, 680637 Singapore (SG)
(74) Representative: Balder IP Law, S.L.

(57) **Abstract**

The invention concerns a sealing member (1), especially for sealing a piston (20). The sealing member (1) comprises a partial ring-shaped body (2) including a slit portion (3) and a main body portion (4), wherein the ring-shaped body (2) extends annularly about a central axis (z) and a radial axis (r) is defined perpendicular to the central axis (z). Further, the main body portion (4) comprises, as end faces with respect to the central axis (z), a topmost surface (5) and a bottommost surface (6). A thickness (7) in an axial direction parallel to the central axis (z) of the main body portion (4) between the topmost surface (5) and the bottommost surface (6) varies along a circumferential direction (8) of the main body portion (4). The invention also concerns a door actuator (100) including the sealing member (1).

## Description

The invention concerns a sealing member, especially for sealing a piston, and a door actuator for opening and/or closing a door.

Conventionally, ring-shaped sealing members for sealing pistons (also known as "piston rings") are known. Such conventional sealing members are commonly provided with a slit for easy insertion into a groove, especially a groove of a piston to be sealed by the sealing member. Although these provide easy insertion, they commonly have a problem of not sufficiently sealing the piston. In particular, when the fluids in a cylinder in which the piston is provided are under pressure, they can circumvent the sealing member by flowing through the slit thereof. Therefore, conventional sealing members commonly do not provide a sufficient seal.

An object of the present invention is to provide a sealing member which can provide a sufficient sealing effect while also being easy to install and/or remove.

This object is solved by the features of the independent claim. The dependent claims contain advantageous embodiments of the present invention.

A sealing member, especially for sealing a piston, of the present invention comprises a partial ring-shaped body. The partial ring-shaped body includes a slit portion and a main body portion. Therein, the partial ring-shaped body extends annularly about a central axis. Further, a radial axis is defined as being perpendicular to the central axis. The main body comprises, as end faces with respect to the central axis, a topmost surface and a bottommost surface. Further, a thickness in an axial direction, which is parallel to the central axis, of the main body between the topmost surface and the bottommost surface varies along a circumferential direction of the main body portion. In other words, the thickness of the main body portion is not constant along the circumferential direction of the main body portion.

The sealing member of the present invention has the advantage that a pressure acting on the sealing member, especially in an axial direction of the sealing member, can elastically deform the sealing member in order to close a gap of the slit portion such that fluids cannot pass therethrough. Therefore, the sealing member of the present invention provides a more reliable and sufficient sealing effect, while also being easy to insert.

In the above and the following, the terms "ring-shaped" and/or "partial ring-shaped" are to be understood as meaning a shape corresponding at least in part substantially to a circle-shape, wherein the shape thereof is not necessarily limited to being a round shape. For example, the "ring-shape" can be a round ring, or a polygonal ring. For example, an (in a radial direction) outer circumference of the "ring-shape" may be round or polygonal and/or an inner circumference thereof may be round or also polygonal. Of course, a combination of round and/or polygonal portions of one or both inner and outer circumferences is also possible. Further, "partial ring-shaped" is to be understood as a substantially open ring shape. For instance, a ring (circular or polygonal) with a slit may be understood as "partial ring-shaped". This shape pertains to a relaxed, not installed state of the sealing member.

Preferably, the main body portion of the sealing member comprises at least one tapered portion. In the tapered portion, the thickness in the axial direction of the main body portion is tapered along the circumferential direction of the main body portion. Thereby, the thickness of the main body portion gradually varies along the circumferential direction thereof. This provides the advantage that a pressure acting on the sealing member can advantageously be distributed in an even manner in order to close the slit portion of the sealing member, thereby providing a better sealing effect.

Advantageously, the tapered portion of the main body portion is tapered towards the slit portion of the partial ring-shaped body. In other words, a thinner part of the tapered portion is closer to the slit portion than a thicker part of the tapered portion. This provides an especially reliable sealing effect of the sealing member.

Further preferably, the tapered portion extends, in the circumferential direction of the main body portion, from the slit portion in a range of a minimum and/or a maximum of a fraction of a circumference of the partial ring-shaped body. Therein, the minimum is preferably one twentieth, more preferably one tenth, even more preferably one eighth. In addition or alternatively, the maximum is preferably one half, more preferably one quarter, even more preferably one sixth. In other words, as an example of these foregoing values, a circumferential length of the tapered portion, starting from the slit portion, is preferably between and including one twentieth and one half of the circumference of the partial ring-shaped body. This has the advantageous effect of providing a sealing member with a reliable and effective sealing effect.

In another advantageous embodiment, the main body portion of the sealing member preferably comprises, in the circumferential direction, a first half portion and a second half portion. Therein, the first half portion and the second half portion extend to the slit portion from a point of the main body portion that is opposite to the slit portion. The first half portion and the second half portion each include one tapered portion. In other words, the sealing member preferably includes two tapered portions, one in each half portion of the main body portion thereof. This provides an advantageously effective sealing effect of the sealing member.

Advantageously, an extension plane of the topmost surface of the main body portion is perpendicular to the axial direction in the first half portion of the main body portion. Further, in the second half portion, an extension plane of the bottommost surface of the main body portion is perpendicular to the axial direction. This has the advantage that the sealing member can provide an effective and reliable sealing effect.

Preferably, an angle between the bottommost surface of the main body portion in the tapered portion of the first half portion and the extension plane of the bottommost surface in the second half portion is in a range of a minimum and a maximum. In addition or alternatively, an angle between the topmost surface of the main body portion in the tapered portion of the second half portion and the extension plane of the topmost surface in the first half portion is in a range of the minimum and the maximum. Therein, the minimum is preferably 0.25°, more preferably 0.5°, even more preferably 1°. In addition or alternatively, the maximum is preferably 5°, more preferably 2.5°, even more preferably 1.5°, further preferably 1.25°. In other words, one or both of the aforementioned angles is preferably in a range between and including, as a preferable example, 0.25° and 5°. As a preferable example, both aforementioned angles are 0.5°. These values further advantageously promote an effective and reliable sealing effect.

Further advantageously, a thickness along the radial axis of the partial ring-shaped body between an inner circumference and an outer circumference of the main body portion is constant along the circumferential direction. In other words, the entire main body portion can preferably have a substantially constant thickness along the circumferential direction, the constant thickness being with respect to the radial direction of the partial ring-shaped body. This further advantageously promotes an effective and reliable sealing effect.

Preferably, the slit portion may be an angle cut and/or a step cut. This allows for easy insertion of the sealing member while also providing an effective and reliable sealing effect.

The present invention also concerns a door actuator for opening and/or closing a door. The door actuator comprises a piston for actuating the door and at least one sealing member according to any one of the foregoing advantageous embodiments. Therein, the piston includes at least one piston groove respectively configured to receive the sealing member. The door actuator may preferably comprise a plurality of pistons, wherein each piston may comprise one or more piston grooves and respective sealing members. The sealing members may be employed as so-called "piston rings".

The sealing member may be made of or comprise metal and/or a plastic and/or a rubber material.

Further details, advantages, and features of preferred embodiments of the present invention are described in detail with reference to the figures.

Therein,
Fig. 1 shows a top view of a sealing member according to one embodiment of the present invention,
Fig. 2 shows a top view of a sealing member according to a second embodiment of the present invention,
Fig. 3 shows a side view of the sealing member according to the first embodiment of the present invention, and
Fig. 4 shows a schematic cross section of a door actuator according to one embodiment of the present invention.

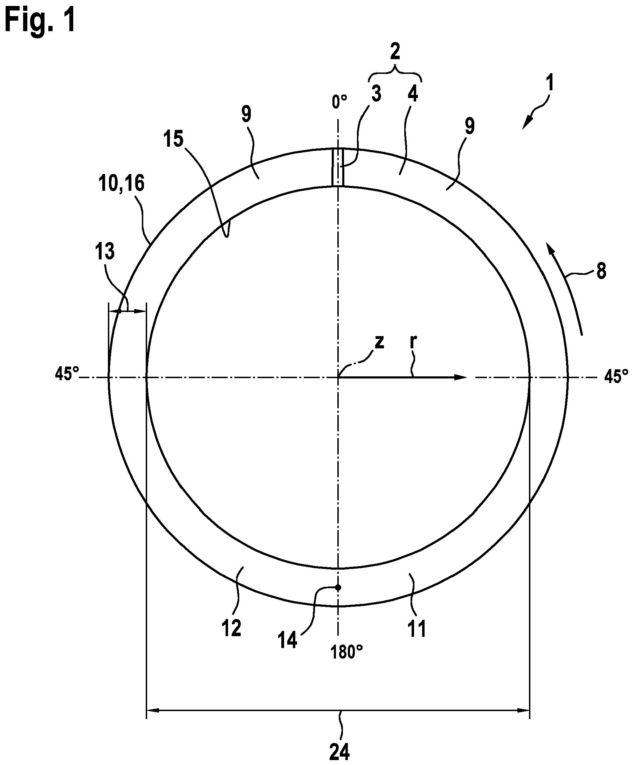

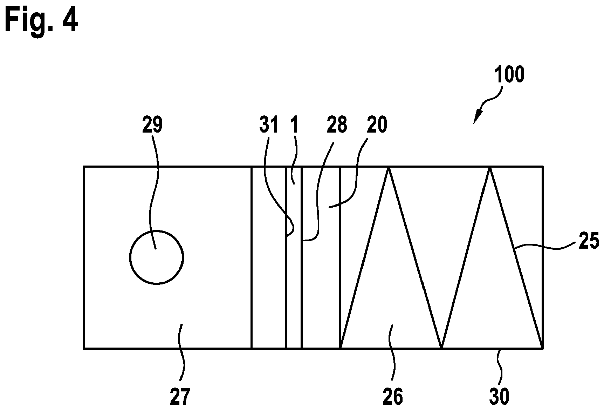

Fig. 1 shows a top view of a sealing member 1 according to one embodiment of the present invention. More specifically, fig. 1 shows the sealing member 1 in a relaxed state before being installed or after being removed from another element that is to be sealed by the sealing member 1. For instance (see also Fig. 4), the sealing member 1 may seal a piston as another element.

Therein, the sealing member 1 comprises a partial ring-shaped body 2. The partial ring-shaped body 2 includes a slit portion 3 and a main body portion 4. In other words, the sealing member 1 is a slit ring.

In the present embodiment, the sealing member 1 is a slit circular ring.

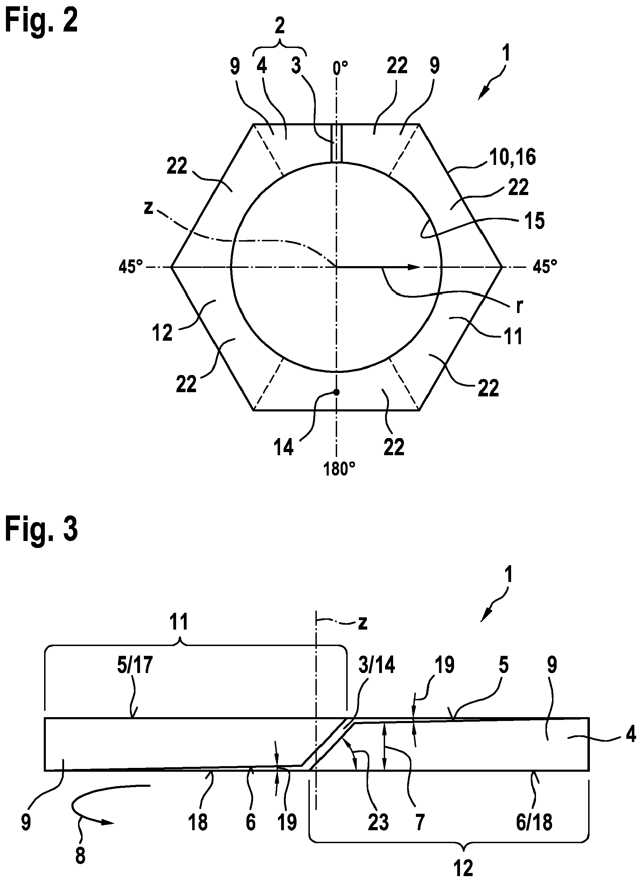

The slit portion 3 of the partial ring-shaped body 2 is defined as a gap between ends of the main body portion 4, without including the aforementioned ends of the main body portion 4. In the same sense, the main body portion 4 does not include the slit portion 3. As can be seen from a comparison with Fig. 3, the slit portion 3, or rather the slit thereof, is an angle cut.

The following axes and directions are defined with respect to the sealing member 1: A central axis z is defined which is surrounded by the ring-shaped body 2. In other words, the ring-shaped body 2 extends annularly about the central axis z. Further, a radial axis r is defined which is perpendicular to the central axis z. A circumferential direction 8 is defined as a direction along a circumference 10 of the partial ring-shaped body 2.

A circumference 10 is defined as the length of an outer circumference 16 of the partial ring-shaped body 2 including the main body portion 4 and the slit portion 3 (calculated simply as 2 x π x r, wherein r is an outer radius of the main body portion 4 in the case of a circular partial ring-shaped body 2).

The partial ring-shaped body 2 has a thickness 13 along the radial axis r (radial thickness) between an inner circumference 15 and an outer circumference 16 of the main body portion 4. As can be taken from Fig. 1, the sealing member 1 of this embodiment has a constant radial thickness 13 along the circumferential direction 6. That is, the radial thickness 13 of the partial ring-shaped body 2 is the same over the entire circumference 10 thereof.

Further, a first half portion 11 and a second half portion 12 are defined as two halves of the main body portion 4. Therein, the respective halves 11, 12 of the main body portion 4 are defined as extending to the slit portion 3 from a point 14 opposite (180°) to the slit portion 3.

As will be described with respect to Fig. 3, each of the halves 11, 12 of the main body portion 4 of the sealing member 1 according to this embodiment include a tapered portion 9 (not visible in top view). In the tapered portion 9, a thickness 7 in the axial direction parallel to the central axis z of the main body portion 4 varies along the circumferential direction 8 of the main body portion 4.

Starting from the slit portion 3, i.e. 0°, each of the tapered portions 9 extends to roughly 45° of the main body portion 4. In other words, the thickness 7 in the axial direction (see: Fig. 3) of the main body portion 4 increases starting from 0° up to and including 45°. Between and including 45° and 180°, each of the half portions 11, 12 of the main body portion 4 has a constant thickness 7 (see: Fig. 3) in axial direction (parallel to central axis z).

In this specific example, although not limited thereto, the thickness 13 in the radial direction r of the main body portion 4 is 3.2 mm. Further, an inner diameter 24 of the main body portion 4 is 32 mm. The thickness 7 in the central axis z direction (see: Fig. 3) in the non-tapered portions of the main body portion 4 is 3.7 mm.

Fig. 2 shows a top view of a sealing member 1 according to a second embodiment of the present invention.

As can be taken from Fig. 2, the sealing member 1 of the second embodiment differs from the sealing member 1 of the first embodiment in that the sealing member 1 of the second embodiment of the present invention is of a polygonal partial-ring shape. In other words, the sealing member 1 of the present embodiment comprises a partial ring-shaped body 2 including a slit portion 3 and a main body portion 4, wherein the main body portion 4 has a polygonal outer circumference 16. The inner circumference 15 is circular in this embodiment.

In this embodiment, each of the first half portion 11 and the second half portion 12 include a tapered portion 9. Herein, the tapered portion 9 is formed, for example, in one straight portion 22 of the main body portion 4. In particular, the tapered portions 9 are both formed in a respective half of the straight portion 22, in which the slit portion 3 is formed. The tapered portions 9 are formed so as to be tapered (i.e. thinner in the axial direction) towards the slit portion 3 (see also: Fig. 3).

Of course, the inner circumference 15 of the main body portion 4 of the sealing member 1 of the embodiments of the present invention can also be polygon-shaped. In addition, it is possible that only portions of the outer circumference 16 and/or the inner circumference 15 of the main body portion 4 is circular or polygonal-shaped.

Fig. 3 shows a side view of the sealing member 1 according to the first embodiment of the present invention. The following explanations can also hold true for the sealing member 1 of the second embodiment.

As can be taken from Fig. 3, the slit portion 3 of the sealing member 1 is an angle cut. In this case, both the first and the second embodiment of the sealing member 1 include an angle cut slit.

Further, the main body portion 4 comprises two tapered portions 9. In the tapered portions 9, a thickness 7 in an axial direction parallel to the central axis z varies along a circumferential direction 8 of the main body portion 4.

More specifically, the main body portion 4 is tapered towards the slit portion 3 of the partial ring-shaped body 2 in the tapered portions 9.

These tapered portions 9 are described as follows. The main body portion 4 comprises, as end faces with respect to the central axis z, a topmost surface 5 and a bottommost surface 6. The aforementioned thickness 7 in axial direction is defined as the distance between the topmost surface 5 and the bottommost surface 6. In the first half 11 (see: Figs. 1 and 2), the bottommost surface 6 is tapered (tapered portion 9) towards the slit portion 3. In the second half portion 12, the topmost surface 5 is tapered towards the slit portion 3. As can be seen in Fig. 3, the tapered portions 9 encompass roughly 45° starting from the slit portion 3, of the main body portion 4. In addition, in the first half portion 11 and the second half portion 12, the respective opposite end faces 6, 5, which are opposite to the aforementioned tapered end faces 5, 6, are perpendicular to the central axis z. In other words, only one end face 5, 6 in each of the half portions 11, 12 is tapered, whereas the opposite end face 6, 5 is not tapered.

Further, an angle 19 is defined as an angle between the respective tapered end faces 5, 6, and the non-tapered end faces. This angle 19 is defined as an angle between the bottommost surface 6 (tapered surface) of the main body portion 4 in the tapered portion 9 of the first half portion 11 and an extension plane 18 (a theoretical plane achieved by extending the respective surface) of the bottommost surface 6 in the second half portion 12 (non-tapered surface). Likewise, this angle 19 is also defined as an angle between the topmost surface 5 in the second half portion 12 (tapered surface) and an extension plane 17 of the topmost surface 5 in the first half portion 11 (non-tapered surface).

In this specific example, the angle 19 is roughly 0.5°. It is to be understood that, although in this case they are the same, the angle 19 can be different between the first half portion 11 and the second half portion 12. With this angle 19, a maximum thickness 7 difference between the ends of the tapered portions 9 and the thickness of the non-tapered portions is 0.4 mm, i.e. the thickness 7 at the end of tapered portions 9 of the main body portion 4 is 3.3 mm.

When a pressure acts on the sealing member 1, for instance in a bottom-to-top direction in Fig. 3, due to the tapered portion 9 in the second half portion 12 of the main body portion 4, the main body portion 4 can elastically deform to abut against an especially plane surface (for instance, an inner surface of a groove formed in a piston) with its topmost surfaces 5 (of both half portions 11, 12). Due to this elastic movement of the second half portion 12 in the upwards direction in Fig. 3, the slit portion 3 is closed. The same effect is achieved when a pressure acts on the sealing member 1 in an opposite, i.e. top-to-bottom direction. Therein, the bottommost surface 6 of the first half portion 11 is elastically deformed to abut against a plane surface on the bottom of Fig. 3 such that the slit portion 3 is closed. In other words, the gap between the ends of the main body portion 4 is closed via pressure acting on the sealing member 1 along a direction parallel to the central axis z. Therefore, fluids (to be sealed against) are at least partially hindered from passing through the slit portion 3 of the sealing member 1.

Thereby, the sealing member 1 achieves the advantageous effect of allowing for a reliable and effective seal.

In the foregoing embodiments, an angle 23 of the angle cut slit portion 3 is 45°, for example. The aforementioned advantageous effect can also be achieved if the slit portion 3 is a step cut.

In addition, it is to be understood that the tapered portions 9 are not limited to being a linear slope, as shown in Fig. 3. Instead, these can also be nonlinear, for example curved, wave-shaped, and/or stepped.

Fig. 4 shows a schematic cross section of a door actuator 100 according to one embodiment of the present invention. The door actuator 100 is for opening and/or closing a door or damping a movement thereof. For this, the door actuator 100 of this embodiment includes a spring 25, for example, and a piston mechanism including a piston 20. Therein, the piston mechanism is connected to a spindle 29 such that a movement of the piston 20 results in a rotation of the spindle 29, thereby opening and/or closing and/or damping a door connected to the spindle 29.

A housing 30 of the door actuator 100 includes fluids such as air and/or hydraulic oil in inner spaces 26, 27 thereof. In order for the piston 20 to function properly, the inner spaces 26, 27 are sealed from each other, in order to prevent an escape of a fluid from one inner space (for example inner space 26) to the other (for example inner space 27).

In order to be sealed properly, the piston 20 comprises a piston groove 28. Further, a sealing member 1 according to the foregoing embodiments is inserted into the piston groove 28.

When a pressure, for instance by a fluid in the inner space 26, acts on the piston 20, in particular on the sealing member 1 in the piston groove 28, the sealing member 1 is pressed against an inner wall 31 of the piston groove 28. Thereby, as described above, the sealing member 1 is elastically deformed and the gap due to the slot portion 3 thereof is closed, thus preventing a leak of fluids.

The door actuator 100 may comprise a plurality of pistons 20. Further, the piston(s) 20 of the door actuator 100 may each also comprise a plurality of piston grooves 28, and respectively a plurality of sealing members 1.

The sealing member 1 can thus be easily inserted into the piston groove 28, while also achieving an effective and reliable sealing effect.

It is to be understood that the sealing member 1 is not restricted to sealing pistons 20 or piston grooves 28. For example, the sealing member 1 can also seal valves or other openings in fluid-filled elements, such as housings 30 of door actuators 100.

### List of Reference Numerals

- 1: sealing member
- 2: partial ring-shaped body
- 3: slit portion
- 4: main body portion
- 5: topmost surface
- 6: bottommost surface
- 7: thickness in central axis direction
- 8: circumferential direction
- 9: tapered portion
- 10: circumference of the partial ring-shaped body
- 11: first half portion
- 12: second half portion
- 13: thickness along radial axis
- 14: point opposite to slit portion
- 15: inner circumference
- 16: outer circumference
- 17: extension plane of topmost surface
- 18: extension plane of bottommost surface
- 19: angle
- 20: piston
- 22: straight portion of main body portion
- 23: angle
- 24: inner diameter of main body portion
- 25: spring
- 26, 27: inner spaces
- 28: piston groove
- 29: spindle
- 30: housing of door actuator
- 31: inner wall of piston groove
- 100: door actuator
- z: central axis
- r: radial axis

## Claims

1. Sealing member (1), especially for sealing a piston (20), comprising:
• a partial ring-shaped body (2) including a slit portion (3) and a main body portion (4), wherein the partial ring-shaped body (2) extends annularly about a central axis (z) and a radial axis (r) is defined perpendicular to the central axis (z),
• the main body portion (4) comprises, as end faces with respect to the central axis (z), a topmost surface (5) and a bottommost surface (6), and
• a thickness (7) in an axial direction parallel to the central axis (z) of the main body portion (4) between the topmost surface (5) and the bottommost surface (6) varies along a circumferential direction (8) of the main body portion (4).

2. Sealing member (1) according to claim 1, wherein the main body portion (4) comprises at least one tapered portion (9), wherein the thickness (7) in the axial direction (z) of the main body portion (4) in the tapered portion (9) is tapered along the circumferential direction (8) of the main body portion (4).

3. Sealing member (1) according to claim 2, wherein the tapered portion (9) of the main body portion (4) is tapered towards the slit portion (3) of the partial ring-shaped body (2).

4. Sealing member (1) according to claim 2 or 3, wherein the tapered portion (9) extends, in the circumferential direction (8) of the main body portion (4), from the slit portion (3) in a range of a minimum and/or a maximum of a fraction of a circumference (10) of the partial ring-shaped body (2), wherein the minimum is one twentieth, preferably one tenth, more preferably one eighth and/or the maximum is one half, preferably one quarter, more preferably one sixth.

5. Sealing member (1) according to any one of claims 2 to 4, wherein the main body portion (4) comprises, in the circumferential direction (8), a first half portion (11) and a second half portion (12), the first half portion (11) and the second half portion (12) extending to the slit portion (3) from a point (14) of the main body portion (4) opposite to the slit portion (3), and the first half portion (11) and the second half portion (12) respectively include one tapered portion (9).

6. Sealing member (1) according to claim 5, wherein, in the first half portion (11), an extension plane (17) of the topmost surface (5) of the main body portion (4) is perpendicular to the axial direction, and, in the second half portion (12), an extension plane (18) of the bottommost surface (6) of the main body portion (4) is perpendicular to the axial direction.

7. Sealing member (1) according to claim 6, wherein an angle (19) between the bottommost surface (6) of the main body portion (4) in the tapered portion (9) of the first half portion (11) and the extension plane (18) of the bottommost surface (6) in the second half portion (12) and/or an angle (19) between the topmost surface (5) of the main body portion (4) in the tapered portion (9) of the second half portion (12) and the extension plane (17) of the topmost surface (5) in the first half portion (11) is in a range of a minimum and a maximum, wherein the minimum is 0.25°, preferably 0.5°, more preferably 1° and/or the maximum is 5°, preferably 2.5°, more preferably 1.5°, more preferably 1.25°.

8. Sealing member (1) according to any one of the foregoing claims, wherein a thickness (13) along the radial axis (r) of the partial ring-shaped body (2) between an inner circumference (15) and an outer circumference (16) of the main body portion (4) is constant along the circumferential direction (8).

9. Sealing member (1) according to any one of the foregoing claims, wherein the slit portion (3) is an angle cut and/or a step cut.

10. A door actuator (100) for opening and/or closing a door, comprising:
• at least one piston (20) for actuating the door; and
• at least one sealing member (1) according to any one of the foregoing claims, wherein
• the at least one piston (20) includes at least one piston groove (28) respectively configured to receive the sealing member (1).
